(19) Europäisches Patentamt

European Patent Office

Office européen des brevets

(11) **EP 0 988 493 B1**

(12) **EUROPEAN PATENT SPECIFICATION**

(45) Date of publication and mention
of the grant of the patent:
**13.08.2003 Bulletin 2003/33**

(51) Int Cl.⁷: **F24J 2/10**

(21) Application number: **98930005.8**

(86) International application number:
**PCT/SE98/01172**

(22) Date of filing: **15.06.1998**

(87) International publication number:
**WO 98/057102 (17.12.1998 Gazette 1998/50)**

(54) **METHOD OF OPTIMISATION OF A SUN PANEL**

VERFAHREN ZUR OPTIMIERUNG EINES SOLARPANEELS

PROCEDE D'OPTIMISATION D'UN PANNEAU SOLAIRE

(84) Designated Contracting States:
**AT DE DK NL**

(30) Priority: **13.06.1997 SE 9702256**

(43) Date of publication of application:
**29.03.2000 Bulletin 2000/13**

(73) Proprietor: **VATTENFALL AB
S-162 87 Stockholm (SE)**

(72) Inventor: **KARLSSON, Björn
S-814 70 Älvkarleby (SE)**

(74) Representative: **Wiklund, Erik
AWAPATENT AB,
Box 53
826 22 Söderhamn (SE)**

(56) References cited:
**DE-A- 2 932 683**

EP 0 988 493 B1

**Description**

The present invention relates to a method of optimisation of a sun panel of the single-axis-concentrating type of the kind exhibiting a trough-shaped, asymmetrical reflector with a reflecting interior surface which serves to reflect incident solar radiation onto an elongate absorber located in the trough, which absorber is arranged between a front and a rear reflector portion.

Background of the Invention

A general problem with respect to all sun panels is to enable the manufacture of these panels at a low cost and with sufficiently high efficiency such that the price per energy unit produced will be competitive in relation to other forms of energy. Consequently, it is important for the sun panel to have a design and to be composed of materials which render it as inexpensive as possible to manufacture per unit area but also efficient enough to utilise as much as possible per unit area of the incident solar energy. Furthermore, it is important to utilise as efficiently as possible the ground surface used for a sun panel installation so that no sunlight or as little sunlight as possible falls on the ground between adjacent sun panels instead of being utilised in the installation. These three requirements are often contradictory and, consequently, an acceptable compromise must be found to enable energy production at a reasonable cost.

Sun panels of the type mentioned by way of introduction are known in a number of different variants and designs. A main objective of such sun panels is to concentrate the incident solar radiation onto an absorber which is as small as possible, partly because absorbers are expensive to manufacture and partly in order to minimise heat loss from the absorber. Both these factors increase with increasing absorber dimensions.

It is possible to achieve a very high degree of concentration in a sun panel installation, and thus minimal absorber size, if the installation is designed with an automatic sun tracker mechanism which ensures that each individual sun panel is directed towards the sun at the most favourable angle. However, such automatic sun trackers are expensive and require a great deal of maintenance and for that reason have not been used extensively.

In order to utilise the required ground surface as efficiently as possible, the reflectors are usually asymmetrical in shape with a relatively long and flat front portion in front of the absorber as seen from the sun, while a rear portion of the reflector is given a relatively short and highly domed shape. An example of such a sun panel is disclosed in DE 2 932 683. This causes problems with respect to optimising the shape of the reflector and employing the material used in the most efficient way.

Brief Description of the Invention

It is a main object of the present invention to provide a method of optimisation of sun panels of the kind mentioned by way of introduction for adapting the same to the latitude and solar irradiation conditions of the intended place of installation. In this way, the efficiency of the solar panel increases and optimal use is made of the reflector material utilised. At least these objects are achieved by a method according to claim 1.

The invention is thus based on the insight that the optimal position of the reflector with respect to the degree of displacement in the forward and backward directions respectively in relation to the absorber, varies according to the latitude and solar irradiation conditions of the intended place of installation. Accordingly, the method enables the maximisation of the annual solar irradiation utilised by a sun panel for the place of installation in question.

One way of optimisation of a sun pand could be to attempt to find in a model with the desired reflector shape the reflector location providing the maximum amount of utilised sun energy. However, the present invention provides a method to calculate both the shape of the reflector, on the basis of, e.g., a mathematical curve, and the reflector location providing the maximum sun yield.

The calculation of the location of the reflector is based on the solar irradiation measured from different effective solar altitudes during the year for the locality in question. According to a first calculation method, the total amount of solar irradiation upon a straight line connecting the front and rear edges of the reflector, i.e. in practice usually upon a transparent pane of glass or plastic covering the reflector trough, is calculated and maximised. By calculating the annual solar irradiation for different forward and backward displacements respectively of the reflector in the intended reflector profile, i.e. for different inclinations of the cover plate, the reflector location providing the maximum amount of annual solar irradiation upon the reflector can be found.

According to a second alternative method, the maximum amount of annual solar irradiation upon the areas adjacent to the front and the rear edge respectively of the reflector is calculated. The reflector location providing an equal amount of annual solar irradiation upon the front and the rear reflector edge also provides the greatest total amount of annual solar irradiation upon the sun panel.

The method is generally applicable to all asymmetrical, single-axis-concentrating sun panels with an optional reflector shape. However, according to a preferred embodiment of the invention, it is preferable that both the front and the rear reflector portion of the reflector are formed as a sector of a parabola according to the mathematical relation $y^2 = 4px$ in an orthogonal coordinate system where the x-axis constitutes a symmetry axis of the parabola while a point $F = (p,0)$ constitutes the focal point or focus of incident rays parallel to the symmetry axis. The symmetry axis of the front reflector portion is aligned with an upper acceptance angle for the solar altitude while the symmetry axis of the rear reflector portion is aligned with a lower acceptance angle for the solar altitude. The upper and lower acceptance angles can suitably be selected from a graph showing measured annual solar irradiation from different effective solar altitudes.

Brief Description of the Appended Drawings

The drawings show, in

FIG. 1     a perspective view of a sun panel with a single-axis-concentrating, asymmetrical shape;

FIG. 2     a schematic cross-section through the sun panel in Fig. 1;

FIG. 3     a schematic cross-section through a sun panel which illustrates the principle of the dimensioning method according to the invention, the sun panel reflector having a shape corresponding to a preferred embodiment of the invention;

FIG. 4     a graph showing the annual solar irradiation in Stockholm for different effective solar irradiation angles; and

FIG. 5     a geometrical figure illustrating the principles of the calculation of the effective solar irradiation angle.

Detailed Description of Preferred Embodiments of the Invention

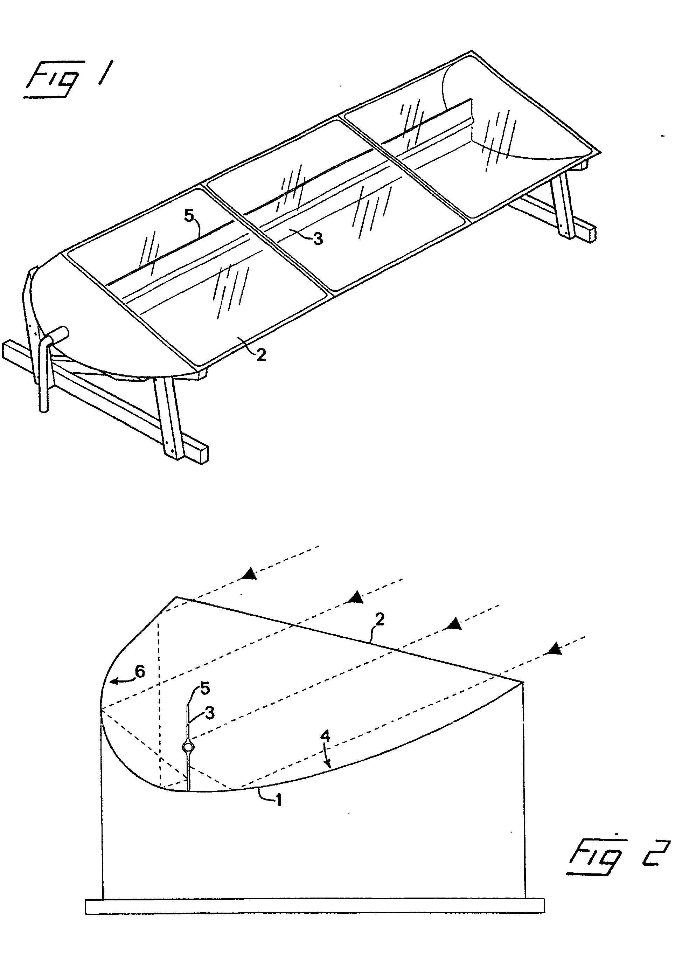

Reference is first made to Figs 1 and 2 of which Fig. 1 is a perspective view and Fig. 2 shows a schematic cross-section through an embodiment of a single-axis-concentrating, asymmetrical sun panel. The latter comprises a reflector 1 having a trough-shaped cross-section whose upward-facing opening is covered by a transparent pane 2 made of, for example, glass or plastic. An absorber 3 is located in the glass-covered trough. The inside of the reflector exhibits a highly reflective surface capable of reflecting incident solar rays onto the absorber in order thereby to concentrate the solar irradiation along an axis parallel to the longitudinal extent of the sun panel.

An individual sun panel trough can in practice be 5-50 m long and is preferably placed with its longitudinal extent in the east-west direction with the pane inclined slightly downwards towards the south in northern latitudes.

The geometrical shape of the reflector 1 and the location of the absorber 3 in relation to the same can be seen in more detail in Fig. 2. The reflector exhibits a front portion 4 which in the preferred location of the sun panel is intended to be located between the absorber and the predominant position of the sun, i.e. in the northern hemisphere in a southerly position in relation to the absorber. This front portion 4 traces a geometrical curve constituting a sector of a parabola according to the mathematical relation $y^2 = 4px$ in an orthogonal coordinate system where the x-axis forms the symmetry axis of the parabola. Such a parabola has a focal point for incident rays parallel to the symmetry axis in the point $F = (p,0)$. All incident rays which are parallel to the symmetry axis will thus be reflected onto the focal point while incident rays at angles lower than the symmetry axis will be reflected onto the area below the focal point.

The absorber 3 is placed in such a way that one of its longitudinal edges 5 is located in or close to the focal point of the parabola and the absorber has such a width that it extends across essentially the entire distance between the focal point and some suitable point on the reflector. In the embodiment of the sun panel shown in the Figure, the symmetry axis is angled at about 65° in relation to the horizontal plane. Furthermore, the absorber is located essentially vertically with its upper longitudinal edge 5 along the axis constituting the focal point of the parabola in each cross-section.

In the area behind the absorber, the reflector exhibits a rear portion 6 with a curved shape which portion is capable of reflecting the incident solar rays above the absorber down onto the rear face of the absorber.

Next, reference is made to Fig. 3, which illustrates the principle of optimisation of the sun panel according to the inventive method. In the Figure, 7 refers to a curve tracing the chosen, desired reflector shape. The curve 7 is extended farther forwards as well as backwards in relation to the final reflector. In the preferred embodiment, the curve 7 is a hypothetical shape which can suitably be defined by a mathematical formula and the location of the reflector in the preferred reflector profile is obtained by a mathematical calculation of the position providing the maximum amount of utilised solar energy. The width of the reflector extends between a front reflector edge 8 and a rear reflector edge 9. In practice, the width may be determined by, e.g., the standard size of a suitable reflector material. In order to utilise the material efficiently and to optimise the efficiency of the sun panel, it is important to position the reflector member in the chosen reflector profile in such a way that the maximum amount of annual solar irradiation is absorbed by the absorber 3.

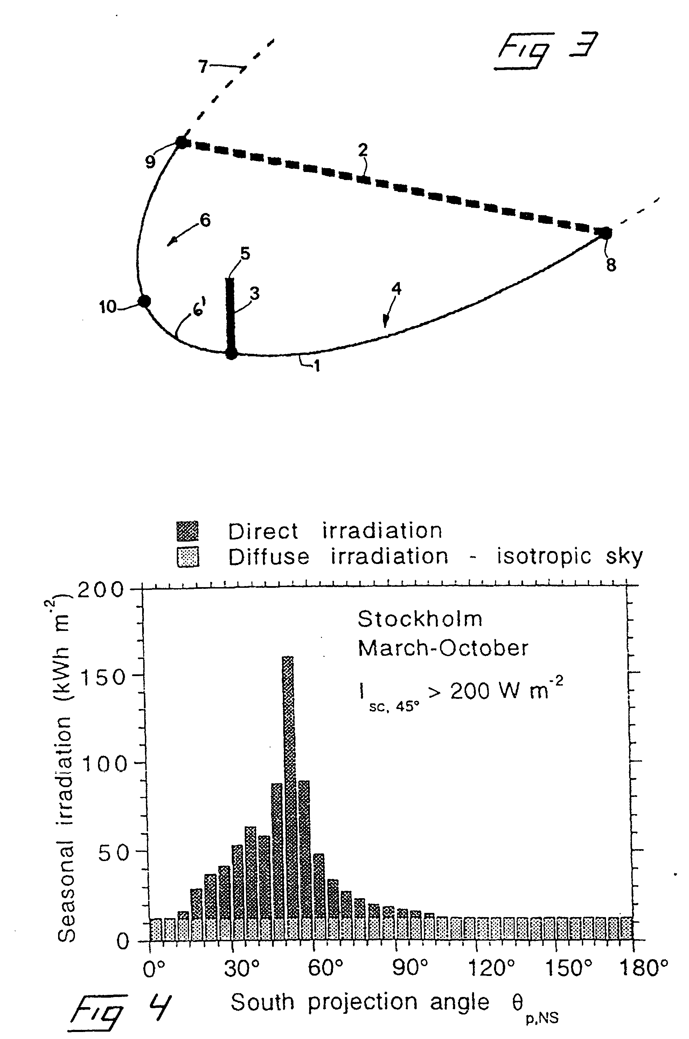

The calculation is carried out on the basis of solar irradiation measured from different effective solar irradiation angles during a year or part of a year in the locality where the sun panel is to be placed. Fig. 4 shows such a solar irradiation chart for Stockholm during March-October of an arbitrary year. Each column in the chart corresponds to 5° effective irradiation angle.

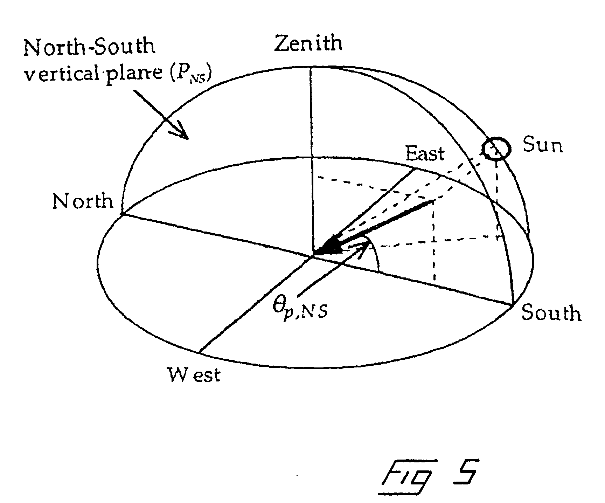

Reference is made to Fig. 5 for an illustration of the term effective or fictitious irradiation angle. This Figure is applicable to sun panels positioned with their longitudinal extent in the east-west direction in the northern hemisphere. As can be seen from the Figure, the effective solar irradiation angle $\Theta_p$ is the angle which the orthogonal projection of the sun on a vertical plane in the north-south direction forms to a horizontal plane.

In a first alternative method according to the invention, one calculates the maximum annual solar irradiation upon a straight line connecting the front and rear reflector edges 8 and 9 respectively of the reflector which normally corresponds to a glass or plastic pane covering the reflector trough. The total amount of irradiation $H_t$ is obtained from the formula:

$$H_t = \Sigma \, h_i \, \cos(90 - \Theta_p - b)$$

where $h_i$ denotes the total amount of irradiation from an angle segment of the sky at the effective solar altitude $\Theta_p$ where $h_i$ can be obtained, for example, from the chart in Fig. 5 and thus corresponds to the size of the columns, while $\Theta_p$ denotes the centre angle of each angle segment. b denotes the inclination of the pane 2, a horizontal surface having b = 0° and a vertical surface having b = 90°.

The reflector member is now placed in the reflector profile in different positions. For each position, the angle of inclination of the pane and the size of the opening, i.e. the distance between the front and rear edges 8 and 9 of the reflector, are calculated. The more the pane is inclined, the smaller the opening. The total amount of irradiation is then calculated at each pane angle according to the formula:

$$H_{pane} = H_t A$$

where A denotes the area of the pane.

In a second alternative method according to the invention, the maximum solar irradiation may be calculated by seeking the position of the reflector member which provides an equal amount of solar irradiation upon the areas adjacent to the front and rear end edges 8 and 9 of the reflector. The reflector member is placed in different positions in the reflector profile and subsequently the angle of inclination $r_b$ for the area adjacent to the rear end edge 8 of the reflector and the angle of inclination $r_f$ for the area adjacent to the front end edge 8 of the reflector are measured or calculated. The above-mentioned formula for $H_t$ is used for calculating the total amount of solar irradiation upon the areas adjacent to the front and rear end edges at different angles $r_b$ and $r_f$. When $r_b$ equals $r_f$ the optimum position has been reached for the reflector at a given reflector width.

Both these alternative methods will produce the same result.

The reflector profile in Fig. 3 is formed according to a preferred embodiment in which the front reflector portion 4 has the shape of a parabola with its focus in the upper edge 5 of the absorber 3 and its symmetry axis aligned with a chosen upper acceptance angle for the solar irradiation. The rear reflector portion 6 traces two different mathematical curves. An arc 6' between the lower edge of the absorber 3 and the point 10 has the same radius as the height of the absorber and its centre coincides with the focus or focal point 5 of the parabola. The arc extends across an angle sector which is 90° minus a lower acceptance angle for the solar irradiation. From the point 10 to the rear end edge 9 of the reflector, the reflector profile traces a parabola with its focal point in the point 5 and its symmetry axis aligned with the lower acceptance angle for solar irradiation. All incident rays parallel to the symmetry axis will be reflected onto the focal point while incident rays with larger angles will be reflected onto the area below the focal point, i.e. onto the absorber.

The lower and upper acceptance angles for the solar irradiation can be obtained from a chart similar to the one in Fig. 4. For example, the acceptance angles may be chosen on the basis that the solar irradiation should exceed a certain minimum value, e.g. 200 W/m$^2$. In order to provide a better basis upon which to choose acceptance angles, the chart in Fig. 4 can be put together with a more precise division if desired.

The original task which forms the basis of the invention is to create a sun panel which is particularly advantageous for use in northern and southern latitudes, i.e. in localities where the maximum solar altitude is relatively low even in summer. In the case of sun panels placed in such locations it is especially important that the investment costs are low since during a large part of the period between October and March, it is only possible to make use of small amounts of solar energy. On the other hand, it is equally important that the sun panel has high efficiency and is really capable of making efficient use of the solar energy irradiating during the period from April to September.

Furthermore, it is an object that the reflector surface and the absorber surface be as small as possible in relation to the opening area of the trough. In addition, as large a part as possible of the incident solar radiation through the opening of the trough during the day and the year, should fall upon the absorber directly or indirectly without being reflected away.

Moreover, it is desirable that the sun panel be dimensioned to catch as much as possible of the incident solar irradiation between an upper and a lower acceptance angle. The latter vary depending on the position of the locality in the north-south direction and the solar irradiation conditions of the locality. From an efficiency point of view, it is advantageous to limit the angle sector within which the solar energy is utilised optimally while still keeping it large enough for the total amount of energy utilised during the year to be as great as possible. For example, it has been found that the upper acceptance angle for places located at 60° north and south latitude respectively should be between 60-70° or preferably about 65°. For each one-degree increase or decrease of the position of the locality in the north-south direction, the acceptance angle should be decreased and increased respectively by about 1°.

In an embodiment according to Fig. 3, the absorber may be orientated with its width extent or its principal plane in many different directions. What is essential is that one of the longitudinal edges of the absorber be located in or close to the focal point or focus and that it extends across essentially the entire space between the focal point and the parabolic reflector. From a cost point of view the most advantageous choice is to position the absorber towards the rear in the direction of the x-axis. Here, the distance between the parabola and the focal point is the smallest and, consequently, heat loss can also be minimised. However, a drawback of placing the absorber in this way is that only a very small amount of direct solar irradiation falls upon it. The major part of the irradiation is reflected at least once which reduces the efficiency of the sun panel because of the reflection loss. In the preferred embodiment the absorber is vertically aligned. This increases its size somewhat but on the other hand also increases the amount of direct solar irradiation. Moreover, it is easier to install the absorber since it can simply be placed in the bottom of the reflector trough.

In addition to an absorber of the thermal type, through which a heat carrier medium circulates which accumulates the heat energy of the solar irradiation, it would be quite possible to use solar cells in which the solar irradiation is transformed into electric energy.

## Claims

1. A method for optimisation of a sun panel of the single-axis-concentrating type of the kind exhibiting a trough-shaped, asymmetrical reflector (1) with a reflecting interior surface which serves to reflect incident solar radiation onto an elongate absorber (3) placed in the trough, which absorber is arranged between a front (4) and a rear (6) reflector portion, **characterised by** the steps of;

   measuring the annual solar irradiation within different sectors of the effective solar irradiation angle, i.e. the angle which the orthogonal projection of the sun on a vertical plane in the north-south direction forms to a horizontal plane;

   emanating from the measured annual, effective solar irradiation, selecting upper and lower acceptance angles for the sun panel, i.e. solar altitudes between which the sun panel is adapted to operate effectively;

   with respect to both shape and positioning in relation to a horizontal plane, determining a cross-sectional profile (7) of the reflector (1), in the form of a mathematical formula, with a longer extent in both the forward and the backward direction in relation to the final reflector;

   positioning a reflector member of a given width in different positions in the cross-sectional profile; and

   determining the position of the reflector member in the cross sectional profile providing the maximum amount of utilised solar energy during a year or a part of a year through calculation on the basis of the measured effective solar irradiation either by;

   a) adding up the total amount of solar irradiation upon the opening (2) of the reflector trough for the chosen angle sector and using the position of the reflector member providing the maximum amount of annual solar irradiation, or;
   b) calculating the annual solar irradiation upon the areas adjacent to the front and rear edges (8, 9) of the reflector and seeking the position of the reflector member providing an equal amount of annual solar irradiation upon the areas adjacent to the front and rear edges of the reflector.

2. A method according to claim 1, **characterised by** making the front reflector portion (4) parabolic with its symmetry axis aligned with an upper acceptance angle for the solar irradiation.

3. A method according to any one of the preceding claims, **characterised by** making at least a part of the rear reflector portion (6) parabolic with its symmetry axis aligned with a lower acceptance angle for the solar irradiation.

## Patentansprüche

1. Verfahren zum Optimieren einer Sonnenbatterie des einachsig konzentrierenden Typs der Art, die einen trogförmigen, asymmetrischen Reflektor (1) mit einer reflektierenden Innenfläche aufweist, der dazu dient, auftreffende Sonneneinstrahlung auf einen länglichen Absorber (3) zu reflektieren, der sich in dem Trog befindet, wobei der Absorber zwischen einem vorderen (4) und einem hinteren (6) Reflektorabschnitt angeordnet ist, **gekennzeichnet durch** die folgenden Schritte:

   Messen der jährlichen Sonneneinstrahlung in verschiedenen Sektoren des effektiven Sonneneinstrahlungswinkels, d.h. des Winkels, den die Orthogonalprojektion der Sonne auf einer vertikalen Ebene in der Nord-Süd-Richtung zu einer horizontalen Ebene bildet;

   ausgehend von der gemessenen jährlichen effektiven Sonneneinstrahlung Auswählen oberer und unterer Öffnungswinkel für die Sonnenbatterie, d.h. Sonnenständen, zwischen denen die Sonnenbatterie effektiv arbeitet;

Bestimmen eines Querschnittprofils (7) des Reflektors (1) hinsichtlich sowohl der Form als auch der Positionierung in Bezug auf eine horizontale Ebene in Form einer mathematischen Formel mit einer längeren Ausdehnung sowohl in der Vorwärts- als auch der Rückwärtsrichtung in Bezug auf den abschließenden Reflektor;

Positionieren eines Reflektorelementes einer bestimmten Breite an verschiedenen Positionen in dem Querschnittsprofil; und

Bestimmen der Position des Reflektorelementes in dem Querschnittsprofil, die die maximale Menge an genutzter Sonnenenergie während eines Jahres oder eines Teils eines Jahres gewährleistet, **durch** Berechnung auf Basis der gemessenen effektiven Sonneneinstrahlung, indem entweder:

a) die Gesamtmenge an Sonneneinstrahlung auf die Öffnung (2) des Reflektortroges für den ausgewählten Winkelsektor addiert wird und die Position des Reflektorelementes genutzt wird, die die maximale Menge an jährlicher Sonneneinstrahlung gewährleistet, oder:

b) die jährliche Sonneneinstrahlung auf die Bereiche an den vorderen und den hinteren Rand (8, 9) des Reflektors angrenzend berechnet wird und die Position des Reflektorelementes gesucht wird, die eine gleiche Menge an jährlicher Sonneneinstrahlung auf die Bereiche an den vorderen und den hinteren Rand des Reflektors angrenzend gewährleistet.

2. Verfahren nach Anspruch 1, **dadurch gekennzeichnet, dass** der vordere Reflektorabschnitt (4) parabolisch ausgeführt wird, wobei seine Symmetrieachse auf einen oberen Öffnungswinkel für die Sonneneinstrahlung ausgerichtet ist.

3. Verfahren nach einem der vorangehenden Ansprüche, **dadurch gekennzeichnet, dass** wenigstens ein Teil des hinteren Reflektorabschnitts (6) parabolisch ausgeführt wird, wobei seine Symmetrieachse auf einen unteren Öffnungswinkel für die Sonneneinstrahlung ausgerichtet ist.

**Revendications**

1. Procédé d'optimisation d'un panneau solaire de type à concentration à axe unique, du genre qui présente un réflecteur asymétrique en forme de bac (1) avec une surface intérieure de réflexion qui sert à réfléchir le rayonnement solaire incident sur un absorbeur allongé (3) placé dans le bac, l'absorbeur étant agencé entre une partie avant (4) et arrière (6) du réflecteur, **caractérisé par** les étapes consistant à :

mesurer le rayonnement solaire annuel dans les limites de différents secteurs de l'angle de rayonnement solaire effectif, c'est-à-dire l'angle que forme la projection orthogonale du soleil sur un plan vertical dans la direction nord-sud par rapport à un plan horizontal ;
en fonction du rayonnement solaire effectif annuel mesuré, sélectionner des angles d'admission supérieur.et inférieur pour le panneau solaire, c'est-à-dire les altitudes solaires entre lesquelles le panneau solaire est adapté pour fonctionner de manière efficace ;
en fonction de la forme et du positionnement par rapport à un plan horizontal, déterminer un profil de section (7) du réflecteur (1), sous la forme d'une formule mathématique, avec une plus grande étendue dans la direction vers l'avant ainsi que dans la direction vers l'arrière par rapport au réflecteur final ;
positionner un élément de réflecteur d'une largeur donnée dans différentes positions dans le profil de section ; et
déterminer la position de l'élément de réflecteur dans le profil de section procurant la quantité maximum d'énergie solaire utilisée pendant un an ou une partie de l'année, par un calcul basé sur le rayonnement solaire effectif mesuré soit:

a) en additionnant la quantité totale de rayonnement solaire sur l'ouverture (2) du bac du réflecteur pour le secteur angulaire choisi et en utilisant la position de l'élément de réflecteur qui procure la quantité maximum de rayonnement solaire annuel, ou ;
b) en calculant le rayonnement solaire annuel d'après les surfaces adjacentes aux bords avant et arrière (8, 9) dû réflecteur et en recherchant la position de l'élément de réflecteur qui procure une quantité égale de rayonnement solaire annuel sur les surfaces adjacentes aux bords avant et arrière du réflecteur.

2. Procédé selon la revendication 1, **caractérisé par** l'étape consistant à rendre la partie de réflecteur avant (4) parabolique avec son axe de symétrie aligné avec un angle d'admission supérieur pour le rayonnement solaire.

3. Procédé selon l'une quelconque des revendications précédentes, **caractérisé par** l'étape consistant à rendre au moins une partie de la partie du réflecteur arrière (6) parabolique avec son axe de symétrie aligné avec un angle d'admission inférieur pour le rayonnement solaire.

Fig 1

Fig 2

Fig 3

Direct irradiation
Diffuse irradiation - isotropic sky

Stockholm
March-October

$I_{sc, 45°} > 200 \text{ W m}^{-2}$

Seasonal irradiation (kWh m$^{-2}$)

South projection angle $\theta_{p,NS}$

Fig 4

Fig 5